(19) Europäisches Patentamt
European Patent Office
Office européen des brevets

(11) **EP 0 600 962 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(21) Anmeldenummer: 92917564.4

(22) Anmeldetag: 20.08.1992

(51) Int. Cl.$^6$: **B01J 23/50**, B01D 53/56

(86) Internationale Anmeldenummer: **PCT/EP92/01900**

(87) Internationale Veröffentlichungsnummer: **WO 93/04774 (18.03.1993 Gazette 1993/08)**

(54) **VERFAHREN ZUR KATALYTISCHEN ZERSETZUNG VON DISTICKSTOFFMONOXID MITTELS EINES SILBERHALTIGEN TRÄGERKATALYSATORS**

METHOD FOR THE CATALYTIC DECOMPOSITION OF NITROUS OXIDE USING A SILVER SUPPORTED CATALYST

PROCEDE DE DECOMPOSITION CATALYTIQUE DE MONOXYDE DE DIAZOTE UTILISANT UN CATALYSEUR SUPPORTE A BASE D'ARGENT

(84) Benannte Vertragsstaaten:
**AT BE CH DE DK ES FR GB IT LI NL SE**

(30) Priorität: **29.08.1991 DE 4128629**

(43) Veröffentlichungstag der Anmeldung:
**15.06.1994 Patentblatt 1994/24**

(73) Patentinhaber: **BASF Aktiengesellschaft D-67063 Ludwigshafen (DE)**

(72) Erfinder:
 • **FETZER, Thomas D-6700 Ludwigshafen (DE)**
 • **BUECHELE, Wolfgang D-6700 Ludwigshafen (DE)**
 • **WISTUBA, Hermann D-6800 Mannheim 51 (DE)**
 • **WITTE, Claus D-6702 Bad Duerkheim (DE)**
 • **BUERGER, Gert D-6800 Mannheim 24 (DE)**
 • **HERMANN, Guenter D-6900 Heidelberg (DE)**

(56) Entgegenhaltungen:
**EP-A- 0 475 173**       **DE-A- 3 543 640**
**FR-A- 2 450 784**       **US-A- 4 689 316**

**Beschreibung**

Die Erfindung betrifft ein Verfahren zur selektiven katalytischen Zersetzung von reinem oder in Gasgemischen vorhandenem Distickstoffmonoxid unter Einsatz des silberhaltigen Trägerkatalysators.

Die katalytische Zersetzung von Distickstoffmonoxid (Lachgas) ist bereits lange bekannt und in zahlreichen Publikationen im Rahmen kinetischer Untersuchungen beschrieben. Bereits 1936 wird in Gmelins Handbuch der anorganischen Chemie, Stickstoff, 8. Auflage, Seite 573 ff, die Zersetzung von Distickstoffmonoxid im Quarzgefäß ohne und in Gegenwart von verschiedenen Katalysatoren wie $SiO_2$, Platinfolie, Titandioxid, Platinschwarz, $Al_2O_3$, Holzkohle sowie Thoriumdioxid bei verschiedenen Temperaturen untersucht. Kinetische Untersuchungen an reinem Silber, an Silber-Gold- und an Silber-Calcium-Legierungen werden von K.E. Hayes, Canad. J. Chem. 37, 583 (1959) beschrieben. R. Larsson gibt in Catalysis Today 4, 235 - 251 (1989) eine Übersicht über die Aktivierungsenergien der Distickstoffmonoxidzersetzung an oxidischen Katalysatoren, insbesondere an Mischoxiden.

Technisches Interesse an der Zersetzung von Distickstoffmonoxid zu Stickstoff und Sauerstoff ging von der NASA aus, die ausgehend von Ammonnitrat über Lachgas die Zersetzung in die Elemente nutzen wollte, um aus einer leicht handhabbaren Verbindung Atemluft für Astronauten zu erzeugen (Chem. Abstract 6 1481 (1965)). Als Katalysatoren wurden als geeignet beschrieben: Platin auf verschiedenen anorganischen Trägern, Rhodium auf Aluminiumoxid sowie Nickel-, Kobalt- und Molybdänoxide.

Ein weiteres technisches Anwendungsgebiet stellt die Beseitigung von Anästhesiegasen, z.B. in Operationsräumen dar. Zu diesem Applikationsfall gibt es eine Reihe japanischer Patentschriften. Folgende Katalysatorsysteme werden genannt: Aktivkohle (in JP 54/11090), Elemente der Eisengruppe in Kombination mit Selten-Erd-Metallen (JP 61/45487), Platin, Palladium, Rhodium, Indium und/oder Ruthenium (JP 55/31463) und Kupfer-, Chromoxid auf Aluminiumoxid (JP 61/50650). Zersetzt wird in der Regel Distickstoffmonoxid in einem Distickstoffmonoxid-Luft-Gemisch (1 : 1). Die JP 61/53142 beschreibt die Entfernung von Distickstoffmonoxid aus Abgasen an Kobalt-, Kupfer- und Manganoxiden auf gamma-Aluminiumoxid.

In der DE-OS 3 543 640 werden zur Zersetzung von Distickstoffmonoxid palladiumhaltige Katalysatoren offenbart.

Die JP 63/07826 beschreibt die Entfernung von Distickstoffmonoxid aus Abgasen u.a. an Palladium oder Kupferoxid auf gamma-Aluminiumträger. Die $N_2O$-Konzentration im Gas beträgt im Beispiel 26 ppm.

Die SU 1 011 238 schließlich beschreibt die Zersetzung von Distickstoffmonoxid an Carbiden auf $CaCl_2$ als Träger.

In den oben angeführten Publikationen werden durchweg Distickstoffmonoxid-Luft- bzw. Distickstoffmonoxid-Sauerstoff-Gemische zur Reaktion gebracht. Gemäß der DE-OS 3 543 640 werden auch Gemische mit 430 ppm NOx und 4 % Wasser (gasförmig) an Palladiumkatalysatoren umgesetzt.

In der nicht vorveröffentlichten DE-P 40 29 061.1 werden Silber enthaltende Trägerkatalysatoren auf $Al_2O_3$ beschrieben, wobei das $Al_2O_3$ eine BET-Oberfläche von 5 bis 25 m²/g aufweist.

Aufgabe der vorliegenden Erfindung war es nun, ein Verfahren zur katalytischen Zersetzung von reinem oder in Gasgemischen enthaltenem Distickstoffmonoxid zur Verfügung zu stellen, mittels dessen Distickstoffmonoxid auch in Gegenwart höherer Konzentrationen von Stickoxiden und anderer Gase, die nicht Sauerstoff oder Stickstoff sind (insbesondere Abgase, die bei der Herstellung von Adipinsäure z.B. durch Oxidation von Cyclohexanol und Cyclohexanon unter Mitverwendung von Salpetersäure anfallen), in die Elemente Stickstoff und Sauerstoff zersetzt werden kann. Ein weiteres zu lösendes Problem ist dabei der selektive Abbau von Distickstoffmonoxid, ohne daß andere Stickoxide in die Elemente zersetzt werden.

Es wurde gefunden, das die gestellte Aufgabe mit silberhaltigen Trägerkatalysatoren gelöst werden kann, die dadurch gekennzeichnet sind, daß der Trägerkatalysator aus 0,1 bis 40 Gew.-% Silber, bezogen auf den Gesamtkatalysator, und einem Aluminiumoxidträger mit Mesoporen und Makroporen und einer BET-Oberfläche von 26 bis 350 m²/g besteht.

Gegenstand der vorliegenden Erfindung ist ein Verfahren zur selektiven katalytischen Zersetzung von reinem oder in Gasgemischen vorhandenem Distickstoffmonoxid bei Temperaturen von 200 bis 1000°C an silberhaltigen Trägerkatalysatoren, dadurch gekennzeichnet, daß der Trägerkatalysator aus 0,1 bis 40 Gew.-% Silber, bezogen auf den Gesamtkatalysator, und einem Aluminiumoxidträger mit Mesoporen und Makroporen und einer BET-Oberfläche von 26 bis 350 m²/g besteht.

Der Vorteil dieses Verfahrens besteht darin, daß Distickstoffmonoxid sowohl in Reinstform, in Gemischen mit Sauerstoff oder Luft als auch in Gemischen mit Luft, die größere Mengen an Wasser und/oder größere Mengen an Stickoxiden (Stickstoffmonoxid, Stickstoffdioxid) enthalten, selektiv in die Element Stickstoff und Sauerstoff zersetzt werden kann, ohne daß dabei die höheren Stickstoffoxide abgebaut werden. Es gelingt problemlos, Distickstoffmonoxid in Gemischen mit z.B. bis zu 50 % Stickstoffdioxid ($NO_2$) und/oder 20 % Wasser in seine Elemente zu zersetzen.

Als Herstellmethode für die Trägerkatalysatoren eignen sich im Prinzip alle Methoden, die in der Literatur zur Herstellung von silberhaltigen Trägerkatalysatoren vorgeschlagen wurden (vgl. z.B. D.I.Hucknall, Selective Oxidations of Hydrocarbons, Academic Press, London (1974), Seite 6). Beispielsweise kann eine Suspension von frisch gefälltem, gut gewaschenem Silberoxid (DE-AS 12 11 607) oder Silbercarbonat (US-PS 3 043 854) auf einen Träger aufgewälzt und die Silberverbindung anschließend thermisch zu Silber zersetzt werden. Bevorzugt eignet sich die Methode, einen grobporösen Träger mit der Lösung eines Silbersalzes (wie z.B. Silbernitrat (US-PS 3 575 888) oder Silberlactat (DE-AS 12 11 607) oder einer Silberkomplexverbindung (z.B. eines Silberamincarboxylat-Komplexes (DE-OS 21 59 346)) zu tränken und anschließend durch Behandlung mit einem Reduktionsmittel oder durch Wärmebehandlung die Silberverbindung zu elementarem Silber zu zersetzen.

Zur Herstellung der Trägerkatalysatoren unter Verwendung von Silber-Amin-Komplexsalzen wird insbesondere auf die DE-P 4 029 061.1 verwiesen, wo dieses Verfahren näher beschrieben ist.

Die bei dem erfindungsgemäßen Verfahren eingesetzten Katalysatoren enthalten 0,1 bis 40 Gew.-%, insbesondere 2 bis 25 Gew.-% Silber bezogen auf das Gewicht des Gesamtkatalysators. Die Silberpartikelgröße im ungebrauchten Katalysator beträgt 0,1 bis 200 nm, bevorzugt 1 bis 100 nm, insbesondere 2 bis 50 nm. Die Bestimmung der Silberpartikelgröße kann z.B. durch XRD (X-ray diffraction) erfolgen.

Die für das erfindungsgemäße Verfahren eingesetzten Aluminiumoxidträger besitzen eine BET-Oberfläche von 26 bis 350 $m^2/g$. (Zur Herstellung derartiger Aluminiumoxide siehe z.B. Ullmann's Encyclopedia of Industrial Chemistry, 5. Ed., Vol. A1, p. 588-590; VCH, 1985). Bevorzugt beträgt die BET-Oberfläche 40 bis 300 $m^2/g$, insbesondere 50 bis 250 $m^2/g$. Die Messung der BET-Oberflächen erfolgte mit einem kommerziell erhältlichen Einpunkt BET-Meßgerät ("Areamat 1" der Fa. Ströhlein). Im Bereich dieser Oberflächen kann Aluminiumoxid in der alpha-, kappa-, beta-, delta-, theta- oder gamma-Phase vorliegen. Daneben ist das gleichzeitige Vorliegen zweier oder mehrerer Phasen nebeneinander möglich. Der eingesetzte Träger kann aus reinem Aluminiumoxid oder aus Gemischen mit anderen Oxiden bestehen. Die Dotierung von hochoberflächigen Aluminiumoxidträgern, d.h. die Bildung von Mischoxiden, führt zur Erhöhung der thermischen Beständigkeit des Trägers (z.B. DE 3 403 328, DT 2 500 548, Appl. Catal. 7, 211-220 (1983), J.Catal. 127, 595-604 (1991)). Zusätzlich können die Fremdionen zur katalytischen Aktivität des Katalysators beitragen. Zur Dotierung können im allgemeinen folgende Elemente herangezogen werden: Alkalimetalle, Erdalkalimetalle, Metalle der seltenen Erden, Sc, Ti, V, Cr, Mn, Fe, Co, Ni, Zn, Y, Zr, B, Si, Ge, Sn, Pb, P, Bi. Der Substitutionsgrad von Aluminiumoxid kann z.B. bei 0,01 bis 50 Gew.-% liegen. Durch Calcinierung des dotierten Trägers kann es zur Ausbildung einer Spinellphase kommen.

Die Porosität des Trägers ist so beschaffen, daß im Aluminiumoxidträger Mesoporen und Makroporen vorliegen. Der Anteil an Poren mit einem Durchmesser von 1 bis 100 nm liegt dabei bevorzugt bei 20 bis 80 %, insbesondere bei 30 bis 70 %. Zusätzlich sollten weitere Poren im Bereich von 0,1 bis 10 µm sowie im Bereich von 10 bis 1000 µm liegen. Der Anteil der Poren mit einem Durchmesser von 0,1 bis 10 µm sollte im Bereich von 0 bis 60 % und der mit einem Durchmesser von 10 bis 1000 µm im Bereich von 0 bis 30 % liegen, wobei mindestens aus einem dieser beiden Porendurchmesserbereiche Poren neben den Poren mit einem Durchmesser von 1 bis 100 nm vorhanden sind. Die Verteilung der Poren in den beiden Bereichen 0,1 bis 10 µm und 10 bis 1000 µm sollte so sein, daß sie im Bereich der kleineren Poren eng, im Bereich der größeren dagegen breiter ist. Im allgemeinen ist der Anteil an Poren im Bereich von 0,1 bis 10 µm höher als im Bereich von 10 bis 1000 µm. Alternativ hierzu kann eine der beiden letztgenannten Porengruppen fehlen, ohne daß dadurch die Aktivität des Katalysators verringert wird. Es können deshalb sowohl bi- als auch trimodale Porenverteilungen resultieren. Das Porenvolumen der Träger (bestimmt durch $H_2O$-Aufnahme) beträgt bevorzugt zwischen 35 und 80 ml/g, was in etwa einem Wert von 30 bis 75 ml/g, gemessen über Hg-Porosimetrie entspricht. Geeignete Träger sind handelsüblich.

Neben Silber können noch andere Aktivkomponenten (Promotoren), insbesondere Cu, Au, Pd, Pt, im Katalysator in Mengen bis zu 40 Gew.-%, bevorzugt bis 20 Gew.-%, bezogen auf die Gesamtmenge der Aktivkomponente, vorhanden sein. Die erfindungsgemäßen Trägerkatalysatoren können in Form von Pellets, Waben, Ringen, Splitt, Voll- und Hohlsträngen oder auch in anderen geometrischen Formen ("shaped catalysts", siehe z.B. US 2 408 164, GB 2 193 907, US 4 233 187) vorliegen.

Für bestimmte Anwendungen ist es dabei wichtig, daß Form und Größe so gewählt werden, daß ein möglichst kleiner Druckverlust entsteht.

Bei dem erfindungsgemäßen Verfahren wird Distickstoffmonoxid oder ein Distickstoffmonoxid enthaltenes Gasgemisch bei Temperaturen, von 200 bis 1000 °C über den Trägerkatalysator geleitet und dabei zu Stickstoff und Sauerstoff zersetzt. Bevorzugt liegen die Temperaturen bei 300 bis 900°C, insbesondere bei 400 bis 850°C. Am Reaktoreingang liegen die Temperaturen dabei bei 200 bis 700°C, im Katalysatorbett kann sich die Temperatur durch die exotherme Zersetzung des $N_2O$ erhöhen. Die GHSV (Gas Hour Space Velocity) kann zwischen 500 und 10000 Nl Gas/l Kat·h, vorzugsweis zwischen 1500 und 6000 Nl Gas/l Kat·h liegen.

Das erfindungsgemäße Verfahren wird in der Regel so durchgeführt, daß man reines Distickstoffmonoxid oder Distickstoffmonoxid enthaltende Gasgemische oder Distickstoffmonoxid enthaltendes Abgas, z.B. in einem Ofen oder Wärmetauscher, auf die notwendige Reaktortemperatur vorheizt und dann durch ein mit dem Silberkatalysator gefülltes Reaktionsrohr leitet. Das Vorheizen des Reaktionsgases kann auch direkt im Reaktionsrohr durch eine vorgeschaltete Inertmaterialschicht erfolgen.

Im Gasgemisch, das nach dem erfindungsgemäßen Verfahren behandelt wird, können neben dem $N_2O$ insbesondere noch NO und/oder $NO_2$ vorhanden sein, und zwar in einer Menge von 0,01 bis 50 Vol.-%, bezogen auf das Gesamtgas. Der $N_2O$-Gehalt des Gasgemisches beträgt bevorzugt 0,01 bis 50 Vol.-%, insbesondere 0,1 bis 30 Vol.-%. Das Gasgemisch kann neben $N_2O$ und $NO/NO_2$ ($NO_x$) außerdem noch $N_2$, $O_2$, CO; $CO_2$, $H_2O$ und Edelgase enthalten.

Der Druckbereich, in dem das Verfahren im allgemeinen durchgeführt wird, liegt zwischen 0,1 und 20 bar, d.h. es kann bei Unter- und Überdruck gearbeitet werden. Bevorzugt ist die Arbeitsweise bei Normaldruck.

Insbesondere eignet sich der erfindungsgemäße Katalysator und das erfindungsgemäße Verfahren dazu, um $N_2O$ in den Abgasen, die bei der Herstellung von Adipinsäure z.B. bei der Oxidation von Cyclohexanol und/oder Cyclohexanon mit Salpetersäure entstehen, zu zersetzen.

Ein besonderer Vorteil des Verfahrens liegt darin, daß $N_2O$ selektiv zersetzt wird, d.h. eine Zersetzung von $NO_x$ als Wertprodukt findet nicht statt.

Mit dem erfindungsgemäßen Verfahren gelingt es, die katalytische Zersetzung von Distickstoffmonoxid sowohl rein als auch in Gasgemischen durchzuführen. Die Erfindung stellt sowohl in wirtschaftlicher Hinsicht als auch in Bezug auf die Leistungsfähigkeit des Katalysators eine deutliche Verbesserung dar.

Beispiele

Durchführung der Distickstoffmonoxid-Zersetzung:

Als Versuchsapparatur diente ein 80 cm langes Reaktionsrohr aus Stahl der Güte Hasteloy C, unterteilt in Aufheiz- und Reaktionszone. Der Innendurchmesser beträgt 18 mm. Um den Temperaturverlauf im Rohr messen zu können, wurde ein Innenrohr mit 3,17 mm Außendurchmesser eingesetzt, indem ein Thermoelement leicht verschoben werden kann. Zur besseren Wärmeübertragung wurde der Reaktor in der Aufheizzone mit Inertmaterial (Steatit) gefüllt. Getestet wurden jeweils 40 ml Katalysator (Splitt 1,5 - 2 mm) bei Atmosphärendruck.

Typische Gaszusammensetzung:;

| | |
|---|---|
| $N_2O$: | 23 Vol.-%; |
| $NO+NO_2$: | 17 Vol.-%; |
| $N_2$: | 47 Vol.-%; |
| $O_2$: | 7,5 Vol.-%; |
| $H_2O$: | 3 Vol.-%; |
| $CO_2$: | 2,5 Vol.-%; |

GHSV: 4000 Nl Gas/l Kat·h.

Die $N_2O$-Umsätze wurden nach folgender Formel berechnet:

$$\text{Umsatz in \%} = \frac{\text{Konz. des } N_2O \text{ am Gaseintritt - Konz. d. } N_2O \text{ am Gasaustritt}}{\text{Konz. d. } N_2O \text{ am Gaseintritt}} \times 100$$

Die Konzentration des $N_2O$ wurde jeweils gaschromatographisch bestimmt.

Beispiel 1

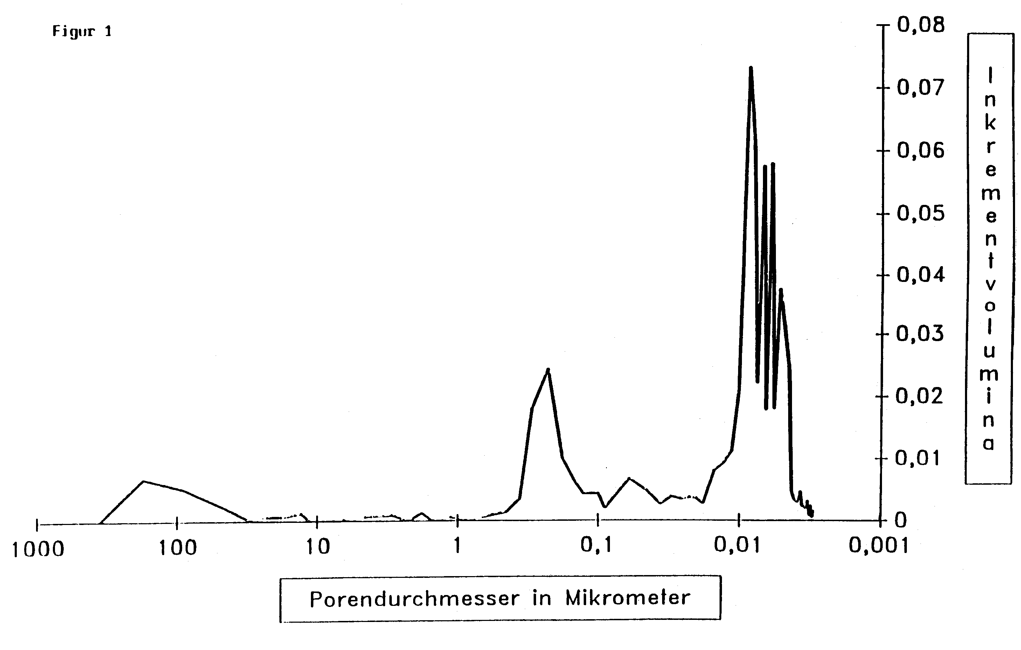

Herstellung des Katalysators: 80 g handelsüblicher Aluminiumoxid-Träger (BASF D 10-11) (BET-Oberfläche 210 $m^2/g$; Wasseraufnahme 65,9 Gew.-%, entsprechend einem Porenvolumen von 65,9 $m^2/g$, die Porenverteilung geht aus Figur 1 hervor) wurde mit 56 ml wäßriger Lösung, die 22,24 g $AgNO_3$ enthält, imprägniert, daraufhin eine Stunde bei Raumtemperatur stehengelassen. Der imprägnierte Träger wurde bis zur Gewichtskonstanz bei 120°C getrocknet und abschließend 4 h bei 700°C calciniert. Der so erhaltene Katalysator enthielt 14,2 Gew.-% Silber und hatte eine BET-Oberfläche von 163 $m^2/g$.

Die kristallographische Phase des Trägers war gamma-Aluminiumoxid. Die Silberpartikelgröße betrug 27 nm.

Der Katalysator zeigte über 550 h Laufzeit bei einer Reaktoreingangstemperatur von 550°C $N_2O$-Umsätze von > 99%.

Der Katalysator hatte nach Versuchsende eine BET-Oberfläche von 130 $m^2/g$. Als einzige kristallographische Phase des Trägers trat auch nach Versuchsende gamma-Aluminiumoxid auf, die Silberpartikelgröße betrug nach dem Versuch 32 nm.

Beispiel 2

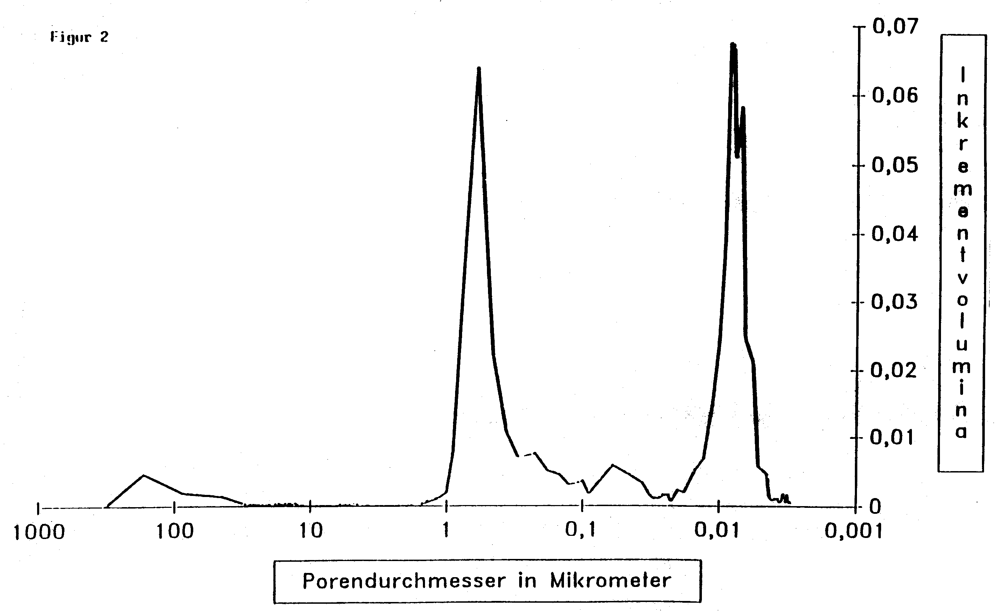

Herstellung des Katalysators: 126,75 g handelsüblicher Aluminiumoxidträger (BET-Oberfläche 157 $m^2/g$; Wasseraufnahme 61,3 Gew.-%, Porenverteilung siehe Figur 2) wurde mit 94 ml wäßriger Lösung, die 35,22 g $AgNO_3$ enthält,

imprägniert, daraufhin eine Stunde bei Raumtemperatur stehengelassen. Der imprägnierte Träger wurde bis zur Gewichtskonstanz bei 120°C getrocknet und abschließend 4 h bei 700°C calciniert. Der so erhaltene Katalysator enthielt 14,2 Gew.-% Silber und hatte eine BET-Oberfläche von 128 m$^2$/g. Die kristallographische Phase des Trägers war gamma-Aluminiumoxid.

Der Katalysator zeigte über 280 h Laufzeit bei einer Reaktoreingangstemperatur von 532°C $N_2O$-Umsätze von > 99%.

Der Katalysator hatte nach Versuchsende eine BET-Oberfläche von 109 m$^2$/g, die kristallographische Phase des Trägers war nach wie vor gamma-Aluminiumoxid.

Beispiel 3

Herstellung des Katalysators: 160,95 g handelsüblicher Aluminiumoxidträger (BET-Oberfläche 102 m$^2$/g; Wasseraufnahme 38,7 Gew.-%) wurde mit 62,3 ml wäßriger Lösung, die 44,71 g $AgNO_3$ enthält, imprägniert, daraufhin eine Stunde bei Raumtemperatur stehengelassen. Der imprägnierte Träger wurde bis zur Gewichtskonstanz bei 120°C getrocknet und abschließend 4 h bei 700°C calciniert. Der so erhaltene Katalysator enthielt 14,5 Gew.-% Silber und hatte eine BET-Oberfläche von 82 m$^2$/g. Die kristallographische Phase des Trägers war delta-Aluminiumoxid.

Der Katalysator zeigte über 250 h Laufzeit bei einer Reaktoreingangstemperatur von 529°C $N_2O$-Umsätze von > 99%.

Der Katalysator hatte nach Versuchsende eine BET-Oberfläche von 77 m$^2$/g, die kristallographische Phase des Trägers war nach wie vor delta-Aluminiumoxid.

Beispiel 4

Herstellung des Katalysators: 225 g AlO(OH) (Pural SB der Fa. Condea) wurden mit 25 g $Ce_2(CO_3)_3$ und 12,5 g Ameisensäure 5 h verknetet, verstrangt, getrocknet und calciniert. 45,3 g hiervon (BET-Oberfläche 185 m$^2$/g; Wasseraufnahme 76 Gew.-%) wurden mit 36,7 ml wäßriger Lösung, die 13,43 g $AgNO_3$ enthält, imprägniert, daraufhin eine Stunde bei Raumtemperatur stehengelassen. Der imprägnierte Träger wurde bis zur Gewichtskonstanz bei 120°C getrocknet und abschließend 4 h bei 700°C calciniert, um das $AgNO_3$ zu Ag zu zersetzen. Der so erhaltene Katalysator enthielt 14,3 Gew.-% Silber und hatte eine BET-Oberfläche von 157 m$^2$/g.

Der Katalysator zeigte über 350 h Laufzeit bei einer Reaktortemperatur von 524°C $N_2O$-Umsätze von > 99%.

Der Katalysator hatte nach Versuchsende eine BET-Oberfläche von 139 m$^2$/g.

Beispiel 5

Herstellung des Katalysators: 225 g AlO(OH) (wie in Beispiel 4) wurden mit 25 g $La(NO_3)_3$ und 12,5 g Ameisensäure 3 h verknetet, verstrangt, getrocknet und calciniert. 64,10 g hiervon (BET-Oberfläche 183 m$^2$/g; Wasseraufnahme 76 Gew.-%) wurden mit 50,9 ml wäßriger Lösung, die 17,8 g $AgNO_3$ enthält, imprägniert, daraufhin eine Stunde bei Raumtemperatur stehengelassen. Der imprägnierte Träger wurde bis zur Gewichtskonstanz bei 120°C getrocknet und abschließend 4 h bei 700°C calciniert. Der so erhaltene Katalysator enthielt 14,5 Gew.-% Silber und hatte eine BET-Oberfläche von 156 m$^2$/g.

Der Katalysator zeigte über 280 h Laufzeit bei einer Reaktortemperatur von 530°C $N_2O$-Umsätze von > 99 %.

Der Katalysator hatte nach Versuchsende eine BET-Oberfläche von 136 m$^2$/g.

Vergleichsbeispiel 1

Herstellung des Katalysators: 150 g handelsüblicher Aluminiumoxidträger (BET-Oberfläche 1,7 m$^2$/g; Wasseraufnahme 29,2 Gew.-%) wurde mit 100 ml wäßriger Lösung, die 41,7 g $AgNO_3$ enthält, imprägniert, daraufhin eine Stunde bei Raumtemperatur stehengelassen. Der imprägnierte Träger wurde bis zur Gewichtskonstanz bei 120°C getrocknet und abschließend 4 h bei 700°C calciniert. Der so erhaltene Katalysator enthielt 14,6 Gew.-% Silber und hatte eine BET-Oberfläche von 1,12 m$^2$/g. Die kristallographische Phase des Trägers war alpha-Aluminiumoxid.

Der Katalysator zeigte zunächst über 150 h Laufzeit bei einer Reaktortemperatur von 610°C $N_2O$-Umsätze von 97,5 %. Danach fiel der Umsatz trotz einer Temperaturerhöhung auf 630°C weiter auf 86,5 %.

Vergleichsbeispiel 2

Herstellung des Katalysators: Ein Palladiumkatalysator auf alpha-Aluminiumoxid, wie er z.B. in der DE-OS 35 43 640 beschrieben ist, wurde nachgestellt. 200 g alpha-Aluminumoxid (BET-Oberfläche 20,2 m$^2$/g) wurden mit NaOH imprägniert und bei 120°C getrocknet. Dieser Träger wurde mit 96 ml einer wäßrigen Natriumtetrachloropalladat-II-Lösung, enthaltend 1,29 g Pd, imprägniert, daraufhin drei Stunden bei Raumtemperatur stehengelassen. Der $Pd^{2+}$-

EP 0 600 962 B1

haltige Träger wurde zur Reduktion des $Pd^{2+}$ mit Hydrazin behandelt. Anschließend wurde der Katalysator chlorfrei gewaschen und bei 120°C bis zur Gewichtskonstanz getrocknet. Der so erhaltene Katalysator enthielt 0,64 Gew.-% Palladium.

Der Katalysator zeigte zunächst über 112 h Laufzeit bei einer Reaktortemperatur von 600°C $N_2O$-Umsätze von 43,3 %. Durch eine Temperaturerhöhung auf 640°C konnte der Umsatz auf 66,5 % gesteigert werden.

**Patentansprüche**

1. Verfahren zur selektiven katalytischen Zersetzung von reinem oder in Gasgemischen vorhandenem Distickstoffmonoxid bei Temperaturen von 200 bis 1000°C an silberhaltigen Trägerkatalysatoren, dadurch gekennzeichnet, daß der Trägerkatalysator aus 0,1 bis 40 Gew.-% Silber, bezogen auf den Gesamtkatalysator, und einem Aluminiumoxidträger mit Mesoporen und Makroporen und einer BET-Oberfläche von 26 bis 350 $m^2/g$ besteht.

2. Verfahren zur selektiven katalytischen Zersetzung von reinem oder in Gasgemischen vorhandenem Distickstoffmonoxid nach Anspruch 1, dadurch gekennzeichnet, daß die BET-Oberfläche des Aluminiumoxidträgers 40 bis 300 $m^2/g$ beträgt.

3. Verfahren zur selektiven katalytischen Zersetzung von reinem oder in Gasgemischen vorhandenem Distickstoffmonoxid nach Anspruch 1, dadurch gekennzeichnet, daß der Aluminiumoxidträger in einer kristallographisch reinen Phase oder in einer gemischten Phase vorliegt.

4. Verfahren zur selektiven katalytischen Zersetzung von reinem oder in Gasgemischen vorhandenem Distickstoffmonoxid nach Anspruch 1, dadurch gekennzeichnet, daß die Porenverteilung im Aluminiumoxidträger bimodal oder trimodal ist.

5. Verfahren zur selektiven katalytischen Zersetzung von reinem oder in Gasgemischen vorhandenem Distickstoffmonoxid nach Anspruch 1, dadurch gekennzeichnet, daß der Aluminiumoxidträger aus reinem Aluminiumoxid oder aus Gemischen von Aluminiumoxid mit anderen Oxiden besteht.

6. Verfahren zur selektiven katalytischen Zersetzung von reinem oder in Gasgemischen vorhandenem Distickstoffmonoxid nach Anspruch 5, dadurch gekennzeichnet, daß das oder die anderen Oxide in Mengen von 0,01 bis 50 Gew.-%, bezogen auf das Gewicht des Trägers, vorhanden ist bzw. sind, und es sich um Oxide der Alkalimetalle, der Erdalkalimetalle, der Metalle der seltenen Erden, des Sc, Ti, V, Cr, Mn, Fe, Co, Ni, Zn, Y, Zr, B, Ge, Sn, Pb, P, Bi und /oder Si handelt.

7. Verfahren zur selektiven katalytischen Zersetzung von reinem oder in Gasgemischen vorhandenem Distickstoffmonoxid nach Anspruch 5, dadurch gekennzeichnet, daß im dotierten Träger eine Spinellphase vorliegt.

8. Verfahren zur selektiven katalytischen Zersetzung von reinem oder in Gasgemischen vorhandenem Distickstoffmonoxid nach Ansprüchen 1 und 5, dadurch gekennzeichnet, daß auf dem Träger neben Silber noch weitere Aktivkomponenten, insbesondere Cu, Au, Pd und/oder Pt, aufgebracht sind.

9. Verfahren zur selektiven katalytischen Zersetzung von reinem oder in Gasgemischen vorhandenem Distickstoffmonoxid nach Anspruch 1, dadurch gekennzeichnet, daß die Zersetzung in Gegenwart von 0,01 bis 50 Vol.-% NO und/oder $NO_2$, bezogen auf Gesamtgas, durchgeführt wird.

10. Verfahren zur selektiven katalytischen Zersetzung von reinem oder in Gasgemischen vorhandenem Distickstoffmonoxid nach Anspruch 1, dadurch gekennzeichnet, daß der $N_2O$-Gehalt des Gasgemisches bei 0,01 bis 50 Vol.-% liegt.

11. Verfahren zur selektiven katalytischen Zersetzung von reinem oder in Gasgemischen vorhandenem Distickstoffmonoxid nach Anspruch 9, dadurch gekennzeichnet, daß das Gasgemisch neben $N_2O$ und NO noch $N_2$, $O_2$, CO; $CO_2$, $H_2O$ und/oder Edelgase enthält.

12. Verfahren zur selektiven katalytischen Zersetzung von reinem oder in Gasgemischen vorhandenem Distickstoffmonoxid nach Anspruch 1, dadurch gekennzeichnet, daß es sich bei dem Gasgemisch um Abgase aus der Herstellung von Adipinsäure unter Mitverwendung von Salpetersäure handelt.

**Claims**

1. A process for the selective catalytic decomposition of nitrous oxide, either in pure form or present in gas mixtures, at from 200 to 1000°C over silver-containing supported catalysts, wherein the supported catalyst comprises from 0.1 to 40 % by weight of silver, based on the total catalyst, and an aluminum oxide support having mesopores and macropores and a BET surface area of from 26 to 350 $m^2/g$.

2. A process for the selective catalytic decomposition of nitrous oxide, either in pure form or present in gas mixtures, as claimed in claim 1, wherein the BET surface area of the aluminum oxide support is from 40 to 300 $m^2/g$.

3. A process for the selective catalytic decomposition of nitrous oxide, either in pure form or present in gas mixtures, as claimed in claim 1, wherein the aluminum oxide support is present in a crystallographically pure phase or in a mixed phase.

4. A process for the selective catalytic decomposition of nitrous oxide, either in pure form or present in gas mixtures, as claimed in claim 1, wherein the pore distribution in the aluminum oxide support is bimodal or trimodal.

5. A process for the selective catalytic decomposition of nitrous oxide, either in pure form or present in gas mixtures, as claimed in claim 1, wherein the aluminum oxide support comprises pure aluminum oxide or mixtures of aluminum oxide with other oxides.

6. A process for the selective catalytic decomposition of nitrous oxide, either in pure form or present in gas mixtures, as claimed in claim 5, wherein the other oxide(s) is or are present in amounts of from 0.01 to 50 % by weight, based on the weight of the support, and the other oxides are those of the alkali metals, the alkaline earth metals, the rare earth metals, Sc, Ti, V, Cr, Mn, Fe, Co, Ni, Zn, Y, Zr, B, Ge, Sn, Pb, P, Bi, and/or Si.

7. A process for the selective catalytic decomposition of nitrous oxide, either in pure form or present in gas mixtures, as claimed in claim 5, wherein a spinel phase is present in the doped support.

8. A process for the selective catalytic decomposition of nitrous oxide, either in pure form or present in gas mixtures, as claimed in claim 1 or 5, wherein not only silver but also further active components, in particular Cu, Au, Pd and/or Pt, are applied to the support.

9. A process for the selective catalytic decomposition of nitrous oxide, either in pure form or present in gas mixtures, as claimed in claim 1, wherein the decomposition is carried out in the presence of from 0.01 to 50 % by volume of NO and/or $NO_2$, based on the total gas.

10. A process for the selective catalytic decomposition of nitrous oxide, either in pure form or present in gas mixtures, as claimed in claim 1, wherein the $N_2O$ content of the gas mixture is from 0.01 to 50 % by volume.

11. A process for the selective catalytic decomposition of nitrous oxide, either in pure form or present in gas mixtures, as claimed in claim 9, wherein the gas mixture comprises not only $N_2O$ and NO but also $N_2$, $O_2$, CO; $CO_2$, $H_2O$ and/or noble gases.

12. A process for the selective catalytic decomposition of nitrous oxide, either in pure form or present in gas mixtures, as claimed in claim 1, wherein the gas mixture is a waste gas from the preparation of adipic acid using nitric acid.

**Revendications**

1. Procédé de décomposition catalytique sélective de l'oxyde azoteux ou protoxyde d'azote pur ou présent dans des mélanges de gaz à des températures de 200 à 1000°C sur des catalyseurs à supports contenant de l'argent, caractérisé en ce que le catalyseur à support se compose de 0,1 à 40% en poids d'argent, par rapport au catalyseur total et d'un support d'oxyde d'aluminium avec des mésopores et des macropores et une surface BET de 26 à 350 $m^2/g$.

2. Procédé de décomposition catalytique sélective de l'oxyde azoteux ou protoxyde d'azote pur ou présent dans des mélanges de gaz selon la revendication 1, caractérisé en ce que la surface BET du support d'oxyde d'aluminium varie de 40 à 300 $m^2/g$.

EP 0 600 962 B1

3. Procédé de décomposition catalytique sélective de l'oxyde azoteux ou protoxyde d'azote pur ou présent dans des mélanges de gaz selon la revendication 1, caractérisé en ce que le support d'oxyde d'aluminium se présente du point de vue cristallographique sous forme d'une phase pure ou d'une phase mixte.

4. Procédé de décomposition catalytique sélective de l'oxyde azoteux ou protoxyde d'azote pur ou présent dans des mélanges de gaz selon la revendication 1, caractérisé en ce que la répartition ou distribution des pores dans le support d'oxyde d'aluminium est bimodale ou trimodale.

5. Procédé de décomposition catalytique sélective de l'oxyde azoteux ou protoxyde d'azote pur ou présent dans des mélanges de gaz selon la revendication 1, caractérisé en ce que le support d'oxyde d'aluminium se compose d'oxyde d'aluminium pur ou de mélanges de l'oxyde d'aluminium et d'autres oxydes.

6. Procédé de décomposition catalytique sélective de l'oxyde azoteux ou protoxyde d'azote pur ou présent dans des mélanges de gaz selon la revendication 5, caractérisé en ce que le ou les autres oxydes est ou sont présents en proportions de 0,01 à 50% en poids, par rapport au poids du support et il s'agit d'oxydes des métaux alcalins, des métaux alcalino-terreux, des métaux des terres rares, du Sc, du Ti, du V, du Cr, du Mn, du Fe, du Co, du Ni, du Zn, du Y, du Zr, du B, du Ge, du Sn, du Pb, du P, du Bi et/ou du Si.

7. Procédé de décomposition catalytique sélective de l'oxyde azoteux ou protoxyde d'azote pur ou présent dans des mélanges de gaz selon la revendication 5, caractérisé en ce qu'une phase du type spinelle est présente dans le support dopé.

8. Procédé de décomposition catalytique sélective de l'oxyde azoteux ou protoxyde d'azote pur ou présent dans des mélanges de gaz suivant les revendications 1 et 5, caractérisé en ce qu'outre de l'argent encore d'autres composants actifs, plus particulièrement CU, Au, Pd et/ou Pt sont déposés sur le support.

9. Procédé de décomposition catalytique sélective de l'oxyde azoteux ou protoxyde d'azote pur ou présent dans des mélanges de gaz suivant la revendication 1, caractérisé en ce qu'on entreprend la décomposition en présence de 0,01 à 50% en volume de NO et/ou de $NO_2$ par rapport au gaz total.

10. Procédé de décomposition catalytique sélective de l'oxyde azoteux ou protoxyde d'azote pur ou présent dans des mélanges de gaz suivant la revendication 1, caractérisé en ce que la teneur en $N_2O$ du mélange de gaz varie de 0,01 à 50% en volume.

11. Procédé de décomposition catalytique sélective de l'oxyde azoteux ou protoxyde d'azote pur ou présent dans des mélanges de gaz suivant la revendication 9, caractérisé en ce que le mélange de gaz contient, outre $N_2O$ et NO, également $N_2$, $O_2$, CO, $CO_2$, $H_2O$ et/ou des gaz nobles.

12. Procédé de décomposition catalytique sélective de l'oxyde azoteux ou protoxyde d'azote pur ou présent dans des mélanges de gaz suivant la revendication 1, caractérisé en ce qu'il s'agit dans le cas du mélange de gaz, de gaz résiduaires provenant de la fabrication de l'acide adipique avec utilisation conjointe d'acide nitrique.

8

Figur 1

Inkrementvolumina

Porendurchmesser in Mikrometer

0,08  0,07  0,06  0,05  0,04  0,03  0,02  0,01  0

0,001  0,01  0,1  1  10  100  1000

Figur 2